# EUROPEAN PATENT SPECIFICATION

(11) **EP 2 261 179 B1**
(45) Date of publication and mention of the grant of the patent: **21.12.2016**
(21) Application number: 10165394.7
(22) Date of filing: 09.06.2010
(51) Int. Cl.: C03B 33/09

(54) **COOLING NOZZLE, COOLING METHOD USING THE SAME, AND BRITTLE MATERIAL SUBSTRATE DIVISION METHOD**
KÜHLDÜSE, KÜHLVERFAHREN DAMIT UND BRÜCHIGMATERIALSUBSTRAT-TRENNVERFAHREN
BUSE DE REFROIDISSEMENT, PROCÉDÉ DE REFROIDISSEMENT L'UTILISANT, ET PROCÉDÉ DE DIVISION DE SUBSTRAT DE MATÉRIAU FRAGILE

(30) Priority: 09.06.2009 JP 2009138156
(43) Date of publication of application: 15.12.2010
(73) Proprietor: Mitsuboshi Diamond Industrial Co., Ltd., Suita-city, Osaka 564-0044 (JP)
(72) Inventor: Otoda, Kenji, Osaka (JP); Fujii, Masahiro, Osaka (JP); Inoue, Shuichi, Osaka (JP)
(74) Representative: Beetz & Partner mbB

(56) References cited:
- WO-A1-2006/129504
- WO-A1-2009/057381
- GB-A- 625 070
- GB-A- 2 068 358
- JP-A- H11 314 187
- JP-A- 2000 281 370
- JP-A- 2006 175 489
- US-A- 2 271 377
- US-A- 3 388 984
- US-A1- 2006 021 977
- US-A1- 2008 074 747
- US-B1- 6 412 309
- US-B2- 6 658 865

## Description

### Technical Field of the Invention

The present invention relates to a cooling nozzle and a cooling method using the cooling nozzle, and in particular to a cooling nozzle suitably used to divide a brittle material substrate such as glass substrate and a cooling method using the cooling nozzle.

### Background Information

Among conventional methods for dividing a brittle material substrate, a method is widely used that divides a substrate by applying an external force along a scribe line in a direction perpendicular to the substrate after the scribe line is formed by bringing a cutter wheel or the like into pressure contact with the substrate and rotating the cutter wheel on the substrate.

Generally, in the case where a brittle material substrate is scribed by a cutter wheel, mechanical stress applied to the brittle material substrate by the cutter wheel is likely to cause a defect of the substrate. Accordingly, fracture and the like may occur due to the aforementioned defect when the substrate is broken into individual products.

For this reason, in recent years, a method for forming a scribe line on a substrate by a laser beam has been in practical use. In this method, after the substrate is irradiated with a laser beam and is heated to a temperature lower than its melting temperature, the substrate is cooled by a cooling medium to produce thermal stress so that a crack is formed in a direction substantially perpendicular to and starting from the surface of the substrate by this thermal stress. In this method for forming a scribe line on a brittle material substrate by a laser beam, since the thermal stress is used, any tools are not in direct contact with the substrate. For this reason, the divided surface can be a smooth surface with less chipping. Accordingly, the strength of the substrate can be maintained.

Typically, as a means for locally cooling the substrate heated by a laser beam, a cooling nozzle is used that sprays a cooling media such as water together with air. As a nozzle for spraying liquid onto a substrate, for example, a nozzle has been proposed that discharges liquid from its center and blows air from the periphery of the center in a shower or ring shape (e.g., Japanese Patent Laid-Open Publication No. H04-17106 7).

WO2006/129504 A1 discloses a method and apparatus for cutting laminated glass by thermal distortion. A cutting line is provided on a laminated glass. Both sides of the laminated glass are heated by a combustion flame of a heating burner along the cutting line and thereafter locally cooled by a mist provided by a cooling nozzle in order to form a crack. The two glass plates are folded and broken along the cracks, and the adhesive layer is then cut.

### Summary of the Invention

### Problems Solved by the Invention

Some component parts to be installed in electric devices have electrode films formed on the surface of a glass substrate. In the case where this type of glass substrate is divided, it is required to reduce the spray amount of cooling liquid as small as possible.

However, if the discharging amount of cooling water is suppressed, the cooling liquid will be widely scattered by blowing air. For this reason, the cooling spot will be large. As a result, the substrate cannot be efficiently locally cooled.

The present invention is aimed at solving the aforementioned problem. It is an object of the present invention it to provide a cooling nozzle and a cooling method capable of efficiently locally cooling an object to be cooled such as substrate with a small amount of cooling liquid.

Furthermore, it is an object of the present invention to provide a brittle material substrate division method for efficiently forming a scribe line by locally cooling a substrate heated by a laser beam with a small amount of cooling liquid.

### Means to Solve the Problems

The invention proposes to solve the above objects by providing a cooling nozzle according to claim 1 and a method using such a cooling nozzle According to an aspect of the present invention, a cooling nozzle is provided that includes a gas discharging outlet that is formed in a ring shape, and a liquid tube that protrudes outward from substantially the center of the gas discharging outlet. The liquid tube discharges cooling liquid. In this cooling nozzle, the protruding amount of said liquid tube falls within a range of 0.5 to 1.0 mm.

In addition, from viewpoint of reducing the amount of cooling liquid and the size of cooling spot, said liquid tube preferably has a straight tube portion that has a constant inner diameter and a length not less than 3 mm from the end of said liquid tube.

In addition, the inclination angle of an inner end surface of a gas flow path preferably decreases in stages relative to the center axis of the gas flow path toward said gas discharging outlet. Specifically, it is preferable that the inner end surface of said gas flow path be inclined at an angle of 45° to 60°, and be then inclined at an angle of 20° to 30° in this order toward said gas discharging outlet.

According to another aspect of the present invention, a cooling method is provided for cooling an object to be cooled by any of the aforementioned cooling nozzles. In this method, the distance falls within a range of 3 to 10 mm between the end of said liquid tube of said cooling nozzle and the surface of the object to be cooled.

According to still another aspect of the present invention, a brittle material substrate division method is provided that includes a step for moving a laser beam relative to a brittle material substrate to irradiate the brittle material substrate with the laser beam whereby heating said substrate to a temperature less than the melting temperature of said substrate, then discharging cooling liquid onto said substrate from a cooling nozzle to cool said substrate whereby forming a scribe line of a vertical crack by using thermal stress that is produced in said substrate, wherein, as said cooling nozzle, any of the aforementioned cooling nozzles is used.

In this method, the distance preferably falls within a range of 3 to 10 mm between the end of said liquid tube of said cooling nozzle and the surface of the brittle material substrate.

### Effects of the Invention

According to the cooling nozzle and the cooling method of the present invention, since the liquid tube protrudes 0.5 to 1.0 mm outward from substantially the center of the gas discharging outlet, it is possible to suppress that discharged gas scatters cooling liquid. Accordingly, even if the amount of cooling liquid is small, it is possible to reduce the size of cooling spot, and to efficiently locally cool a substrate.

In addition, in the case where said liquid tube has a straight tube portion that has a constant inner diameter and a length not less than 3 mm from the end of said liquid tube, cooling liquid discharged from the liquid tube becomes close to a laminar flow. Accordingly, it is possible to suppress that cooling liquid is scattered. Therefore, it is possible to more efficiently locally cool a substrate.

In addition, in the case where the inclination angle of an inner end surface of a gas flow path decreases in stages relative to the center axis of a gas flow path toward said gas discharging outlet, it is possible to provide a straightening effect in that gas is straightened in the gas flow path. Accordingly, it is possible to suppress that gas discharged from the gas discharging outlet is scattered. Therefore, it is possible to suppress that cooling liquid is scattered, and to more efficiently locally cool a substrate.

According to the brittle material substrate division method of the present invention, since the aforementioned cooling nozzle is used, it is possible to locally cool a substrate heated by a laser beam with a small amount of cooling liquid, and to efficiently form a scribe line. For this reason, this method can be suitably used for dividing a brittle material substrate (e.g., glass substrate with electrode films formed thereon) required to avoid moisture remaining on the substrate surface.

### Brief Description of the Drawings

**Fig. 1****:** Cross-sectional view showing an exemplary cooling nozzle according to the present invention.
**Fig. 2****:** Schematic explanatory cross-sectional view of the inclination angles of inclined surfaces, the length of a liquid tube, and the distance between the end of the liquid tube and an object to be cooled in the cooling nozzle shown in Fig. 1.
**Fig. 3** Schematic view showing an exemplary apparatus that employs a brittle material substrate division method according to the present invention.
**Fig. 4** Explanatory view of division of a brittle material substrate.

### Mode for Carrying out the Invention

The following description will describe a cooling nozzle according to the present invention with reference to drawings. However, the present invention is not limited to their embodiments.

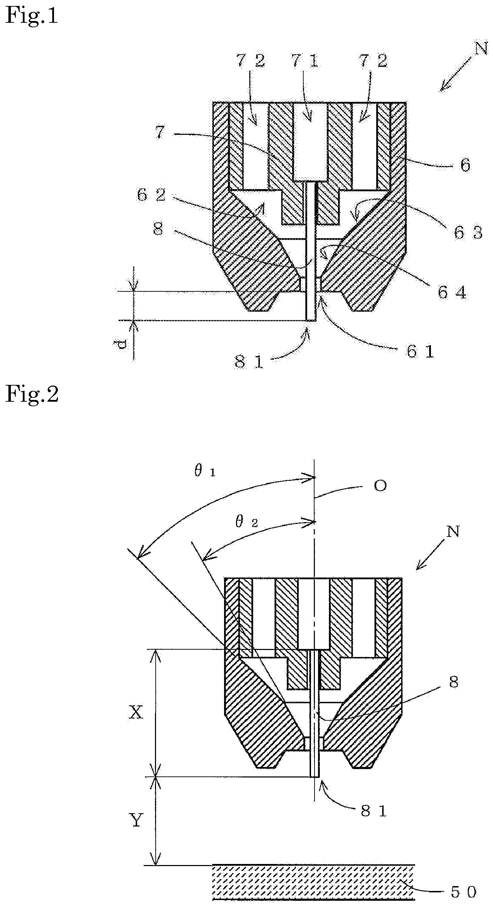

Figs. 1 and 2 are schematic views showing an exemplary cooling nozzle according to the present invention. A cooling nozzle N shown in these Figures includes a nozzle cap 6 and a nozzle piece 7 as main component members. The nozzle piece 7 is accommodated and fixed in the nozzle cap 6. The nozzle cap 6 has a substantially cylindrical shape with a bottom on one end. A gas discharging outlet 61 is formed in the center of the inner bottom. Recessed first and second inclined surfaces 63 and 64 are formed contiguous to each other as an inner end surface of a gas flow path 62 of the nozzle cap 6 that communicates with the gas discharging outlet 61. As shown in Fig. 2, the inclination angle Θ₁ of the first inclined surface 63 relative to the center axis O of the gas flow path 62 is larger than the inclination angle Θ₂ of the second inclined surface. In other words, the inclination angle of the inner end surface of the gas flow path 62 decreases toward the gas discharging outlet 61 in two stages.

According to experiment by the inventors, the inclination angle Θ₁ of the first inclined surface 63 preferably falls within a range of 45° to 60°, and the inclination angle Θ₂ of the second inclined surface 64 preferably falls within a range of 20° to 30°. In the case where the inclination angles thus decrease in stages, gas can be straightened that flows in the gas flow path 62. Therefore, it is possible to suppress that gas discharged from the gas discharging outlet 61 is scattered. The decrease is not limited to two stages, but may be three or more stages as long as constraints on the nozzle cap 6 machining allow.

The nozzle piece 7 has double tube structure. The central tube path of the nozzle piece 7 serves as a liquid flow path 71, and the peripheral path serves as a gas flow path 72. A liquid tube 8 is held at the end of the nozzle piece 7. The liquid flow path 71 and the gas flow path 72 are connected to a cooling liquid supply means and a gas supply means (not shown), respectively.

The liquid tube 8 is inserted at substantially the center of the gas discharging outlet 61, and protrudes outward from the gas discharging outlet 61. It is important that the protruding amount d of the liquid tube 8 from the gas discharging outlet 61 falls within a range of 0.5 to 1.0 mm. In the case where the liquid tube 8 protrudes from the gas discharging outlet 61 at the protruding amount in this range, it is possible to suppress the gas scatters cooling liquid. Accordingly, even if the amount of the cooling liquid is small, it is possible to reduce the size of cooling spot. The lower and upper limits of the protruding amount d of the liquid tube 8 are more preferably 0.6 mm and 0.9 mm, respectively.

In addition, the length X (shown in Fig. 2) of a straight tube portion of the liquid tube 8 is preferably not less than 3 mm from the end 81 of the liquid tube 8. The straight tube portion has the same constant inner diameter as the end of the liquid tube 8. Since the liquid tube 8 is a needle-shaped thin tube through which the cooling liquid flows for the predetermined distance, the flow of the cooling liquid becomes close to a laminar flow. Accordingly, it is possible to suppress that cooling liquid discharged from the liquid tube 8 is scattered. Therefore, it is possible to provide local cooling processing. The upper limit of the length X of the liquid tube 8 from the end 81 can be suitably determined in consideration of the inner diameter, the outer diameter and the like of the liquid tube 8. Generally, the upper limit of the length X is 5 mm.

In the thus-configured cooling nozzle N, the cooling liquid is supplied to the liquid tube 8 through the liquid flow path 71 by the supply means (not shown). The cooling liquid flows as a laminar flow, and is discharged outward from the end 81 of the liquid tube 8. The gas is supplied to the gas flow path 62 of the nozzle cap 6 through the gas flow path 72 by the supply means (not shown). The diameter of the gas flow path 62 of the nozzle cap 6 is continuously reduced toward the gas discharging outlet 61 by the first and second inclined surfaces 63 and 64. Thus, the gas is discharged outward from the gas discharging outlet 61 with the pressure of the gas being increased. The cooling liquid discharged from the liquid tube 8 is scattered by the gas that vigorously blows off, and is sprayed onto an object to be cooled. As discussed above, in the cooling nozzle N according to the present invention, since the liquid tube 8 protrudes from the gas discharging outlet 61, it is possible to suppress the gas scatters cooling liquid. Accordingly, it is possible to reduce the size of cooling spot, and to provide efficient cooling processing.

Specifically, in the case of a conventional cooling nozzle including a liquid tube 8 that has a protruding amount zero, in other words, has an end 81 at the same position as a gas discharging outlet 61, the conventional cooling nozzle requires water of 10 mL/min as cooling liquid and air of 40 L/min as gas. In the case of the cooling nozzle according to the present invention including the liquid tube 8 that has a protruding amount of 0.7 mm, the cooling nozzle according to the present invention provides a similar cooling effect even under conditions of water of 1 mL/min and air of 10 L/min.

In cooling processing, the cooling nozzle N according to the present invention is arranged facing the surface of an object to be cooled 50 (shown in Fig. 2). The distance Y is not specifically limited between the end 81 of the liquid tube 8 of cooling nozzle N and the surface of the object to be cooled 50 (shown in Fig. 2). Generally, the distance Y preferably falls within a range of 3 to 10 mm. If said distance is smaller than 3 mm, since the cooling liquid is affected by back pressure that is produced by collision of the gas with the object to be cooled 50, the back pressure is likely to give resistance in the cooling liquid to discharge from the liquid tube 8. On the other hand, if said distance is greater than 10 mm, the cooling liquid will be widely scattered, and as a result the cooling effect will decrease. The distance Y more preferably falls with in a range of 5 to 8 mm between the end 81 of the liquid tube 8 and the surface of the object to be cooled 50.

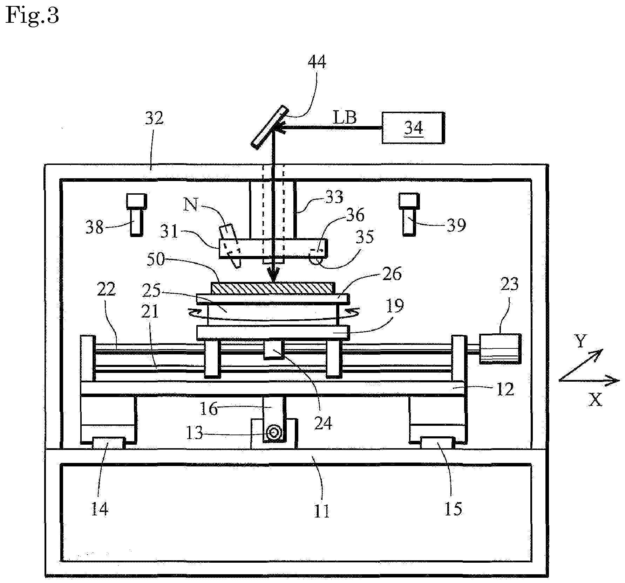

The following description describes a brittle material substrate division method using the cooling nozzle N according to the present invention. Fig. 3 is a schematic view showing an exemplary division apparatus that employs the division method according to the present invention. The division device shown in this Figure includes a slide table 12, a mount 19, and a rotation mechanism 25. The slide table 12 can move on a base 11 in a perpendicular direction (Y-direction) relative to the paper plane. The mount 19 can move on the slide table in a right-and-left direction (X-direction) of the Figure. The rotation mechanism 25 is arranged on the mount 19. The brittle material substrate 50 is mounted on and secured to a rotating table 26 arranged on this rotation mechanism 25, and can be moved in the horizontal plane by these moving portions.

The slide table 12 is movably mounted on a pair of guide rails 14 and 15 that are arranged in parallel to each other on the upper surface of the base 11 and spaced at a certain interval away from each other. A ball screw 13 is arranged in parallel to the pair of guide rails 14 and 15 and between the pair of guide rails 14 and 15, and can be rotated both in forward and reverse directions by an electric motor (not shown). Also, a ball nut 16 is located on the bottom surface of the slide table 12. This ball nut 16 is threadedly engaged with the ball screw 13. Rotation of the ball screw 13 in the forward or reverse direction moves the ball nut 16 in the Y-direction so that the slide table 12 mounted on the ball nut 16 is moved in the Y-direction along the guide rails 14 and 15.

The mount 19 is movably supported on a pair of guide members 21 that are arranged in parallel to each other on the slide table 12 and spaced at a certain interval away from each other. A ball screw 22 is arranged in parallel to the pair of guide members 21 and between the pair of guide members 21, and can be rotated both in forward and reverse directions by an electric motor 23. Also, a ball nut 24 is located on the bottom surface of the mount 19, and is threadedly engaged with the ball screw 22. Rotation of the ball screw 22 in the forward or reverse direction moves the ball nut 24 in the X-direction so that the mount 19 is moved together with the ball nut 24 in the X-direction along the pair of guide members 21.

The rotation mechanism 25 is arranged on the mount 19. Also, the rotating table 26 is arranged on the rotation mechanism 25. The brittle material substrate 50 as an object to be divided is secured onto the rotating table 26 by vacuum suction. The rotation mechanism 25 rotates the rotating table 26 about its center axis that extends in the vertical direction.

A support base 31 is supported above the rotating table 26 by a holding member 33 hanging from an installation base 32 so that the support base 31 is spaced away from and opposed to the rotating table 26. The support base 31 includes a cutter wheel 35, an opening (not shown), and the cooling nozzle N. The cutter wheel 35 forms a trigger crack on the surface of the brittle material substrate 50. The brittle material substrate 50 can be irradiated with a laser beam through the opening. The cooling nozzle N cools the surface of the brittle material substrate 50. The distance preferably falls within a range of 3 to 10 mm between the liquid tube end of the cooling nozzle N and the surface of the brittle material substrate 50.

The cutter wheel 35 is held by a chip holder 36 so that the cutter wheel 35 can be moved downward and upward to a position in pressure contact with the brittle material substrate 50 and a position out of contact with the brittle material substrate 50. Only when the trigger crack is to be formed as a starting point of a scribe line, the cutter wheel 35 is moved downward to the position in pressure contact with the brittle material substrate 50. In order to suppress a hasty cracking phenomenon in that a crack occurs starting from the trigger crack in an unexpected direction, the trigger crack is preferably formed at a position inside the surface side end of the brittle material substrate 50.

A laser output device 34 is disposed on the installation base 32. A laser beam LB is emitted from the laser output device 34, and is reflected downward by a reflection mirror 44. The brittle material substrate 50 secured on the rotating table 26 is irradiated with the laser beam LB from the opening formed on the support base 31 through an optical system held in the holding member 33.

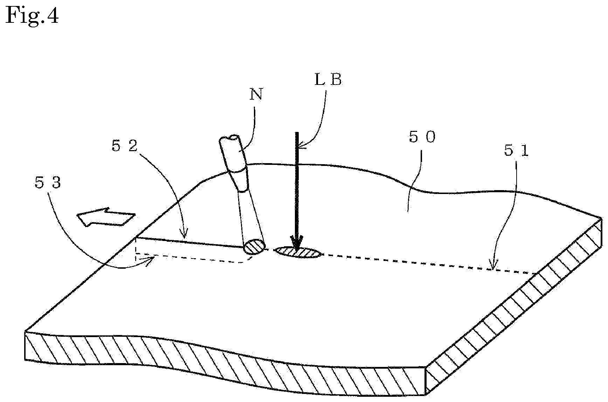

Also, as discussed above, cooling water is discharged together with air toward the brittle material substrate 50 from the cooling nozzle N arranged in proximity to the opening of the support base 31 through which the laser beam LB passes. The cooling water is sprayed at a position of the brittle material substrate 50 that is poisoned on a prospective division line 51 and rearward of the irradiation area of the laser beam LB (see Fig. 4). Although the discharging amount of the cooling water is small that is sprayed from cooling nozzle N according to the present invention, the area of the cooling spot of the cooling water is small as compared with conventional cooling spots. As a result, it is possible to remarkably reduce the amount of cooling liquid to be used as compared with conventional amounts of the cooling liquid to be used. The conventional amounts of the cooling liquid to be used caused a conventional problem in the case where a glass substrate is divided that includes an electrode film formed on the surface of the glass substrate.

A pair of CCD cameras 38 and 39 are arranged in the installation base 32 for recognition of alignment marks that are previously marked on the brittle material substrate 50. These CCD cameras 38 and 39 detect positioning deviation when the brittle material substrate 50 is placed. For example, if the brittle material substrate 50 is deviated at an angle Θ, the rotating table 26 is rotated -Θ. If the brittle material substrate 50 is deviated Y, the slide table 12 is moved -Y.

In the case where the thus-configured division device divides the brittle material substrate 50, the brittle material substrate 50 is first placed on the rotating table 26 and secured by a suction means. Subsequently, the CCD cameras 38 and 39 catch the alignment marks arranged on the brittle material substrate 50, and the brittle material substrate 50 is positioned to a predetermined position based on the caught image data as discussed above.

Subsequently, the trigger crack is formed on the brittle material substrate 50 by the wheel cutter 35 as discussed above. The laser beam LB is then emitted from the laser output device 34. At the same time, the brittle material substrate 50 is irradiated with the laser beam LB in a direction perpendicular to the brittle material substrate 50 surface through the reflection mirror 44 as shown in Fig. 4. At the same time, the cooling nozzle N discharges water as a cooling medium toward a position in proximity to the rear end of the laser beam irradiation area. The brittle material substrate 50 is irradiated with the laser beam LB, and is thus heated in the thickness direction at a temperature less than its melting temperature. Although the brittle material substrate 50 will thermally expand, since the brittle material substrate 50 is locally heated, the brittle material substrate 50 cannot expand. Accordingly, compression stress will be produced in a position centering the irradiation point. Immediately after the brittle material substrate 50 is heated, the surface of the brittle material substrate 50 is then cooled by water sprayed from the cooling nozzle N. At this time, the brittle material substrate 50 will contract. Thus, tensile stress will be produced. The action by this tensile stress forms a vertical crack 53 that extends starting from the trigger crack as the starting point in the brittle material substrate 50 along the prospective dividing line 51.

The laser beam LB and the cooling nozzle N are moved relative to the brittle material substrate 50 along the prospective dividing line 51. As a result, the vertical crack 53 extends so that the scribe line 52 is formed on the brittle material substrate 50. In the case of this embodiment, the laser beam LB and the cooling nozzle N are fixed, and the brittle material substrate 50 is moved by the slide table 12, the mount 19 and the rotation mechanism 25 for the rotating table 26. Needless to say, the brittle material substrate 50 may be fixed, and the laser beam LB and the cooling nozzle N may be moved. Alternatively, both the brittle material substrate 50 side, the laser beam LB/ cooling nozzle N side may be moved.

According to the thus-configured brittle material substrate division method, since the cooling nozzle N according to the present invention can locally cool a part heated by the laser beam LB with a small amount of cooling liquid, this method can be suitably used to suppress the amount of cooling liquid to be used in the case where a glass substrate with electrode films formed on its surface, or the like. Also, since the vertical crack can be stably formed, in addition to improvement of the processing yield, cutting speed can be faster. Therefore, it is possible to reduce the processing time.

### [Industrial Applicability]

According to a cooling nozzle of the present invention, it is possible to suppress that discharged gas scatters cooling liquid, and a small cooling spot can be formed with a small amount of cooling liquid. For this reason, it is possible to provide efficient local cooling processing. Therefore, the cooling nozzle of the present invention is useful.

The above embodiments of the invention as well as the appended claims and figures show multiple characterizing features of the invention in specific combinations. The skilled person will easily be able to consider further combinations or sub-combinations of these features in order to adapt the invention as defined in the in the claims to his specific needs.

### List of Reference Numerals

- 6: Nozzle Cap
- 7: Nozzle Piece
- 8: Liquid Tube
- N: Cooling Nozzle
- d: Protruding Amount of Liquid Tube from Gas Discharging Outlet
- 50: Brittle Material Substrate
- 52: Scribe Line
- 53: Vertical Crack
- 61: Gas Discharging Outlet
- 62: Gas Flow Path
- 63: First Inclined Surface
- 64: Second Inclined Surface
- 71: Liquid Flow Path
- 72: Gas Flow Path
- 81: End
- LB: Laser beam

## Claims

1. A cooling nozzle used for laser cutting of a brittle material substrate, the cooling nozzle comprising:
a gas discharging outlet (61) that is formed in a ring shape; and
a liquid tube (8) that protrudes outward from the center of the gas discharging outlet (61), the liquid tube (8) discharging cooling liquid, wherein
the protruding amount of said liquid tube (8) falls within a range of 0.5 to 1.0 mm, **characterized in that**
the inclination angle of an inner end surface of a gas flow path (62) relative to the center axis of the gas flow path (62) decreases in stages toward said gas discharging outlet (61).

2. The cooling nozzle according to Claim 1, wherein said liquid tube (8) has a straight tube portion that has a constant inner diameter and a length not less than 3 mm from the end of said liquid tube (8).

3. The cooling nozzle according to Claim 3, wherein the inner end surface of said gas flow path (62) is inclined at an angle of 45° to 60°, and is then inclined at an angle of 20° to 30° in this order toward said gas discharging outlet (61).

4. A cooling method for cooling an object to be cooled by the cooling nozzle according to any of Claims 1 to 4, wherein the distance falls within a range of 3 to 10 mm between the end of said liquid tube (8) of said cooling nozzle and the surface of the object to be cooled.

5. A brittle material substrate division method comprising a step for moving a laser beam (LB) relative to a brittle material substrate (50) to irradiate the brittle material substrate (50) with the laser beam (LB) whereby heating said substrate (50) to a temperature less than the melting temperature of said substrate (50), then discharging cooling liquid onto said substrate (50) from a cooling nozzle (N) to cool said substrate (50) whereby forming a scribe line (52) of a vertical crack (53) by using thermal stress that is produced in said substrate (50), **characterized in that** as said cooling nozzle (N), the cooling nozzle according to any of Claims 1 to 4 is used.

6. The brittle material substrate division method according to Claim 6, wherein the distance falls within a range of 3 to 10 mm between the end of said liquid tube (8) of said cooling nozzle (N) and the surface of the brittle material substrate (50).

## Patentansprüche

1. Kühldüse verwendet zum Laserschneiden von einem Brüchigmaterialsubstrat, wobei die Kühldüse aufweist:
einen ringförmigen Gasabgabeauslass (61) und
ein Füssigkeitsrohr (8), das von der Mitte des Gasabgabeauslasses (61) nach außen vorsteht, wobei das Flüssigkeitsrohr (8) eine Kühlflüssigkeit ablässt, wobei
das Flüssigkeitsrohr (8) zwischen 0,5 und 1,0 mm vorsteht,
**dadurch gekennzeichnet, dass**
der Neigungswinkel einer inneren Endfläche eines Gasströmungspfads (62) relativ zu der Mittelachse des Gasströmungspfads (62) stufenweise in Richtung auf den Gasabgabeauslass (61) abnimmt.

2. Kühldüse nach Anspruch 1, wobei das Flüssigkeitsrohr (8) einen geraden Rohrbereich aufweist mit einem konstanten inneren Durchmesser und einer Länge nicht weniger als 3 mm von dem Ende des Flüssigkeitsrohrs (8).

3. Kühldüse nach Anspruch 3, wobei die innere Endfläche des Gasströmungspfads (62) mit einem Winkel von 45° bis 60° geneigt ist, und dann, in dieser Reihenfolge, mit einem Winkel von 20° bis 30° zu dem Gasabgabeauslass (61) geneigt ist.

4. Kühlmethode zum Kühlen eines Objekts, welches durch eine Kühldüse nach einem der Ansprüche 1 bis 4 zu kühlen ist, wobei der Abstand zwischen dem Ende des Flüssigkeitsrohrs (8) der Kühldüse und der Oberfläche des zu kühlenden Objekts in einen Bereich von 3 bis 10 mm fällt.

5. Verfahren zum Trennen eines Brüchigmaterialsubstrats mit einem Schritt zum Bewegen eines Laserstrahls (LB) relativ zu einem Brüchigmaterialsubstrat (50), um das Brüchigmaterialsubstrat (50) mit dem Laserstrahl (LB) zu bestrahlen, wobei das Substrat (50) auf eine Temperatur aufgeheizt wird, die geringer ist als die Schmelztemperatur des Substrats (50), anschließend Ablassen von Kühlflüssigkeit auf das Substrat (50) von einer Kühldüse (N), um das Substrat (50) zu kühlen, wobei eine Vorreißlinie (52) in Form eines vertikalen Risses (53) gebildet wird unter Verwendung der thermischen Belastung, die in dem Substrat (50) erzeugt wird,
**dadurch gekennzeichnet, dass**
als eine Kühldüse (N) die Kühldüse gemäß einem der Ansprüche 1 bis 4 verwendet wird.

6. Brüchigmaterialsubstrat-Teilungsverfahren nach Anspruch 6, wobei der Abstand zwischen dem Ende des Flüssigkeitsrohrs (8) der Kühldüse (N) und der Oberfläche des Brüchigmaterialsubstrats (50) in einem Bereich zwischen 3 und 10 mm liegt.

## Revendications

1. Buse de refroidissement utilisée pour une découpe au laser d'un substrat de matériau fragile, la buse de refroidissement comprenant :
une sortie (61) de décharge de gaz qui est formée à une forme d'anneau ; et
un tube (8) pour liquide qui saille vers l'extérieur depuis le centre de la sortie (61) de décharge de gaz, le tube (8) pour liquide déchargeant un liquide de refroidissement, dans lequel
la quantité de saillie dudit tube (8) pour liquide tombe dans une plage de 0,5 à 1,0 mm, **caractérisée en ce que**
l'angle d'inclinaison d'une surface d'extrémité intérieure d'un chemin (62) d'écoulement de gaz par rapport à l'axe central du chemin (62) d'écoulement de gaz diminue par étapes vers ladite sortie (61) de décharge de gaz.

2. Buse de refroidissement selon la revendication 1, dans laquelle ledit tube (8) pour liquide a une partie de tube rectiligne qui a un diamètre intérieur constant et une longueur non inférieure à 3 mm depuis l'extrémité dudit tube (8) pour liquide.

3. Buse de refroidissement selon la revendication 3, dans laquelle la surface d'extrémité intérieure dudit chemin (62) d'écoulement de gaz est inclinée à un angle de 45° à 60°, et est ensuite inclinée à un angle de 20° à 30° dans cet ordre vers ladite sortie (61) de décharge de gaz.

4. Procédé de refroidissement pour refroidir un objet devant être refroidi par la buse de refroidissement selon l'une quelconque des revendications 1 à 4, dans lequel la distance tombe dans une plage de 3 à 10 mm entre l'extrémité dudit tube (8) pour liquide de ladite buse de refroidissement et la surface de l'objet devant être refroidi.

5. Procédé de division de substrat de matériau fragile comprenant une étape de déplacement d'un faisceau laser (LB) par rapport à un substrat (50) de matériau fragile pour projeter sur le substrat (50) de matériau fragile le faisceau laser (LB), d'où résulte le chauffage dudit substrat (50) à une température inférieure à la température de fusion dudit substrat (50), et ensuite de décharge d'un liquide de refroidissement sur ledit substrat (50) depuis une buse (N) de refroidissement pour refroidir ledit substrat (50), d'où résulte la formation d'une ligne de découpe (52) d'une fissure verticale (53) en utilisant une contrainte thermique qui est produite dans ledit substrat (50), **caractérisé en ce que**, comme ladite buse (N) de refroidissement, la buse de refroidissement selon l'une quelconque des revendications 1 à 4 est utilisée.

6. Procédé de division de substrat de matériau fragile selon la revendication 6, dans lequel la distance tombe dans une plage de 3 à 10 mm entre l'extrémité dudit tube (8) pour liquide de ladite buse (N) de refroidissement et la surface du substrat (50) de matériau fragile.
